# EUROPÄISCHE PATENTANMELDUNG

(11) **EP 2 624 258 A1**
(43) Veröffentlichungstag der Anmeldung: **07.08.2013**
(21) Anmeldenummer: 12154041.3
(22) Anmeldetag: 06.02.2012
(51) Int. Cl.: H01B 3/40, B29C 73/22, H01B 7/28, H02K 3/30

(54) **Selbstheilende Isolierschicht für eine elektrische Maschine**

(71) Anmelder: Siemens Aktiengesellschaft, 80333 München (DE)
(72) Erfinder: Brockschmidt, Mario, 45131 Essen (DE); Kempen, Stefan, Dr., 44388 Dortmund (DE); Pohlmann, Friedhelm, Dr., 45355 Essen (DE); Schmidt, Guido, Dr., 42799 Leichlingen (DE); Staubach, Christian, 45768 Marl (DE)

(57) **Zusammenfassung**

Eine selbstheilende Isolierschicht (19) für einen Leiterstab (7) einer elektrischen Maschine (1) wird angeben. Die Isolierschicht (19) enthält Mikrokapseln (24), wobei die geschlossenen Mikrokapseln (24) in einem Ausgangszustand (21) ein Ausheilungsreagenz (26) oder einen Bestandteil eines solchen enthalten. Die Mikrokapseln (24) sind durch eine betriebsbedingte Beanspruchung, welche zur Bildung eines (mikroskopischen) Risses (30) in der Isolierschicht (19) ausreichend ist, aufbrechbar. In einem Ausheilungszustand (22) füllt das ausgehärtete Ausheilungsreagenz (26) einen gebildeten Riss (30) in der Isolierschicht (19) zumindest teilweise aus. Die Isolierschicht (19) ist hierdurch besonders durchschlagsfest und haltbar.

## Beschreibung

Die Erfindung bezieht sich auf eine selbstheilende Isolierschicht, insbesondere für einen Leiterstab einer elektrischen Maschine. Die Erfindung bezieht sich weiterhin auf eine elektrische Maschine mit einer solchen selbstheilenden Isolierschicht, sowie auf ein Verfahren zur Herstellung der Isolierschicht.

Mit dem Begriff "elektrische Maschine" ist allgemein ein Energiewandler bezeichnet, der zwischen elektrischer und mechanischer Energie wandelt, nämlich ein elektrischer Motor oder ein Generator. Eine solche elektrische Maschine umfasst üblicherweise einerseits einen ortsfesten Stator (oder Ständer) sowie einen rotierenden Rotor (oder Läufer). Bei der elektrischen Maschine handelt es sich insbesondere um einen Turbogenerator, wie er üblicherweise in einem Kraftwerk zur Umwandlung von mechanischer in elektrische Energie eingesetzt wird.

Ein Turbogenerator ist derzeit meist als dreisträngige Drehstrom-Synchronmaschine mit einem massiven zwei- oder vierpoligen Läufer realisiert. Der Leistungsbereich eines solchen Turbogenerators reicht typischerweise von ca. 20 MVA bis ca. 2000 MVA.

Der Stator eines üblichen Synchrongenerators umfasst eine Vielzahl von sogenannten Ständerwicklungen, in welchen durch induktive Wechselwirkung mit dem rotierenden, mit einem konstanten Strom beaufschlagten Rotor eine Wechselspannung induziert wird. Die Statorwicklungen sind in einem sogenannten Blechpaket aufgenommen. Dieses dient unter anderem zur Führung und Verstärkung des magnetischen Feldes. Zur Verringerung von Verlusten durch Wirbelströme ist das gesamte Blechpaket aus dünnen, gegeneinander isolierten Blechen aufgebaut.

Die Statorwicklungen bestehen aus einer Vielzahl von Stäben, deren jeweilige Mittelstücke (der sogenannte "Aktivteil") in Nuten des Blechpakets eingelegt sind. Die einzelnen Stäbe treten am sogenannten "Wickelkopf" evolventenförmig aus den Nuten aus. Dort sind die einzelnen Stäbe zur Statorwicklung verschaltet (d.h. miteinander kontaktiert).

Die im Blechpaket einliegenden Stäbe bzw. Stabbereiche liegen auf hohem elektrischem Potential und sind daher untereinander, sowie gegen das geerdete Blechpaket durch eine Hauptisolierschicht elektrisch isoliert.

Um bei Betriebsspannungen von einigen Kilovolt (kV) Teilentladungen zu vermeiden, ist die Hauptisolierschicht üblicherweise mit einer inneren und einer äußeren Leitschicht gegen Hohlräume und Ablösungen abgeschirmt. Die innere Leitschicht ist als "innere Potentialsteuerung" (IPS) bezeichnet und liegt auf dem Potential des Stabes. Die äußere Leitschicht ist als "Außenglimmschutz" (AGS) bezeichnet und liegt auf Erdpotential. Das elektrische Potential wird in der Hauptisolierschicht ausgehend von der IPS in radialer Richtung bis zum AGS abgebaut.

Üblicherweise endet der Außenglimmschutz im Austrittsbereich, in dem der jeweilige Stab aus der zugehörigen Nut austritt, während die Hauptisolierschicht außerhalb der Nut weitergeführt wird. Diese Anordnung stellt in Bezug auf die elektrische Festigkeit eine kritische Stelle dar, da sich im Wickelkopfbereich zwischen der in einem festen Aggregatzustand vorliegenden Hauptisolierschicht und einem umgebenden gasförmigen Fluid (meist Luft oder Wasserstoff) eine Grenzschicht ausbildet.

Durch die sich zwischen der Hauptisolierschicht und dem Fluid bildende dielektrische Trennfläche entsteht eine typische Gleitanordnung, die neben einer rein radialen Feldkomponente, wie sie im Bereich des Blechpakets vorkommt, zusätzlich eine tangentiale (d.h. innerhalb der Trennfläche, regelmäßig aber etwa parallel zur Längserstreckung des Leiters verlaufende) Feldkomponente aufweist.

Die dadurch tangential beanspruchte Grenzfläche stellt eine besondere Schwachstelle in einer Isolieranordnung dar. Aufgrund der geringen elektrischen Festigkeit von Luft oder Wasserstoff kann es schon bei einer vergleichsweise geringen Spannung zum Einsatz einer Teilentladung, bedingt durch die lokale tangentiale Feldstärkeerhöhung (ca. 0,64 kV/mm bei sauberer Oberfläche) kommen, die sich bei einer weiteren Steigerung der Spannung zu Gleitentladungen entlang der Isolierstoffoberfläche bis zu einem elektrischen Durchschlag (d.h. einem Leiter-Erde-Kurzschluss) ausweiten kann.

Diese kritische Belastung tritt vor allem während der Prüfung des Generators auf, da der Generator zu Prüfungszwecken regelmäßig an die Belastungsgrenze gefahren wird. Durch die Ausbildung von Gleitentladungen an der Oberfläche wird der Isolierstoff langfristig zerstört.

Die größte Feldstärke tritt dabei am Ende des Außenglimmschutzes auf. Daher ist es häufig erforderlich, für eine Feldsteuerung am Ende des Außenglimmschutzes und für eine Festigkeitserhöhung in der Umgebung der freiliegenden Hauptisolierschicht zu sorgen.

Dies wird üblicherweise durch die Herstellung eines sogenannten Endenglimmschutzes erreicht. Dabei werden zur Unterdrückung von Gleitentladungen üblicherweise resistive Potentialsteuerungen durch halbleitende Lacke oder Bänder vorwiegend auf der Basis von Siliziumkarbid oder anderen elektrisch halbleitenden Füllstoffen eingesetzt. Ziel der Potentialsteuerung ist es, den tangentialen Potentialabbau entlang der Isolierstoffoberfläche zu vergleichmäßigen. Hierfür wird ein in axialer Richtung ortsabhängiger und spannungsabhängiger Widerstandsbelag hergestellt. Ein derartiger Endenglimmschutz ist jedoch vergleichsweise zeit- und kostenintensiv herzustellen.

Im Folgenden wird die Hauptisolierschicht, insbesondere in Kombination mit einer Glimmschutzschicht, welche wiederum insbesondere der Außenglimmschutz, der Endenglimmschutz und/oder die Innenpotentialsteuerung ist, allgemein als Isolierschicht bezeichnet.

Die Isolierschicht ist im Betrieb der elektrischen Maschine regelmäßig Beanspruchungen ausgesetzt. Eine Hauptbeanspruchung ist dabei durch die elektrische Feldstärke innerhalb und in der Umgebung der (Haupt-) Isolierschicht gegeben. Neben der elektrischen Hauptbeanspruchung treten auch thermische und mechanische Beanspruchungen auf. Die unterschiedlichen Beanspruchungsarten treten zyklisch mit der einfachen oder vielfachen Netzfrequenz dauerhaft oder transient auf. Transiente Beanspruchungen treten u.a. beim An- und Abfahren der Maschine, bei Lastwechseln und in Folge generatornaher ein- und mehrpoliger elektrischer Fehler im Netz sowie bei einer Fehlsynchronisation auf.

Mit zunehmender Betriebszeit und mit der Anzahl der aufgetretenen transienten Ereignisse und deren Ausmaß tritt eine fortschreitende Alterung bzw. Degradation der Isolierschicht auf, welche die Betriebslebensdauer derselben beschränkt. Ein für die Hauptisolierschicht relevanter und charakteristischer Alterungsmechanismus ergibt sich dabei aus der Kombination bzw. aus dem gleichzeitigen Auftreten der verschiedenen Beanspruchungsarten. Ein typischer Alterungsablauf kann üblicherweise folgendermaßen aussehen:

Zunächst führt eine mechanische Beanspruchung zu einem Initialaufbruch innerhalb der elektrisch belasteten Hauptisolierschicht und daraufhin zur Bildung mikroskopischer Hohlräume oder Spalten. Alternativ können mikroskopische Hohlräume auch herstellungsbedingt in der Isolierschicht vorhanden sein. In den mikroskopischen Hohlräumen und Spalten entstehen aufgrund der dort vorliegenden hohen elektrischen Feldstärke Teilentladungen, die Lichtanteile im ultravioletten Wellenlängenbereich aussenden. Diese UV-Emission führt zu einer weiteren Zerstörung der Isolierschicht, welche meist aus einer Polymermatrix aus einem Epoxid- oder einem Polyesterharz gebildet ist, bei gleichzeitiger Freisetzung von elektrisch leitfähigem Kohlenstoff. Die hohe elektrische Feldstärke in der Hauptisolierschicht treibt diesen Zerstörungsmechanismus in Richtung des elektrischen Feldes voran. Es bilden sich sogenannte Bäumchenstrukturen (engl. "Trees") die am Ende des Vorgangs die Hochspannungselektrode mit dem Erdpotential verbinden und dann zum endgültigen Versagen der Hauptisolierschicht(elektrischer Durchschlag)führen.

Der Erfindung liegt die Aufgabe zugrunde, eine besonders durchschlagfeste und haltbare Isolierschicht für einen Leiterstab einer elektrischen Maschine, sowie ein Verfahren zur Herstellung der Isolierschicht anzugeben.

Bezüglich der Isolierschicht wird oben genannte Aufgabe erfindungsgemäß gelöst durch die Merkmale des Anspruchs 1. Demnach ist, insbesondere für einen Leiterstab einer elektrischen Maschine, eine selbstheilende Isolierschicht vorgesehen. Die "selbstheilende" Eigenschaft der Isolierschicht rührt dabei erfindungsgemäß daher, dass in der Isolierschicht Mikrokapseln enthalten sind, die ein - vorzugsweise flüssiges - Ausheilungsreagenz oder zumindest einen Bestandteil eines solchen enthalten.

Als Mikrokapseln sind dabei insbesondere im Wesentlichen kugelförmige Kapseln bezeichnet, welche bevorzugt eine mikro- oder nanoskalige Größe bzw. einen Durchmesser von etwa 10 µm bis 100 µm, vorzugsweise etwa 20 µm bis 50 µm aufweisen. Diese Mikrokapseln umfassen eine vergleichsweise feste (insbesondere hohlkugelförmige) Schale, welche bevorzugt aus Glas oder einem Polymer gebildet ist, sowie einen in der Schale aufgenommenen Füllstoff. Die Herstellung solcher Mikrokapseln ist dabei an sich bekannt. Eine geeignete Herstellungsvariante ist beispielsweise in DE 10 2005 002 169 B4 beschrieben.

In einem Ausgangszustand liegen die Mikrokapseln geschlossen vor, d.h. sie weisen eine intakte Schale auf, wobei sie ein, vorzugsweise flüssiges, Ausheilungsreagenz oder einen Bestandteil desselben enthalten. Durch eine betriebsbedingte Beanspruchung, welche unter anderem zur Bildung eines mikroskopischen Risses, bzw. einer Spalte oder einem Hohlraum in der Isolierschicht ausreichend ist, sind die Mikrokapseln aufbrechbar. D.h. eine Beanspruchung, welche die Bildung eines (Haar-)Risses in der Isolierschicht bewirkt, bewirkt zudem zumindest indirekt, dass eine oder mehrere Mikrokapseln, insbesondere in der Nähe oder angrenzend an diesen Riss, aufbrechen. Hierdurch wird ermöglicht, dass das Ausheilungsreagenz oder dessen Bestandteil aus der Mikrokapsel austritt, so dass das Ausheilungsreagenz in den Riss eintritt. Anschließend härtet das Ausheilungsreagenz in dem Riss aus, so dass es in einem Ausheilungszustand in einem ausgehärteten Zustand den gebildeten Riss in der Isolierschicht zumindest teilweise ausfüllt. In besonders bevorzugter Ausführungsform entspricht dabei das Ausheilungsreagenz im Wesentlichen den Ausgangsstoffen, welche zur Herstellung der zugehörigen Isolierschicht herangezogen wurden.

Vorteilhafterweise wird durch das Aushärten des Ausheilungsreagenz in dem Riss eine weitere Ausbreitung des Risses unterbunden oder zumindest reduziert. Die eingesetzten Mikrokapseln sind dabei zweckmäßigerweise gleichmäßig in der Isolierschicht verteilt, so dass der vorgestellte Mechanismus vorzugsweise an einer Vielzahl von entstandenen Rissen, insbesondere an jedem gebildeten Riss stattfindet.

Durch den Einsatz der Mikrokapseln wird somit der typische Alterungsmechanismus verlangsamt, wodurch die Lebensdauererwartung bis zu einem Versagen der Isolierschicht erhöht wird.

Die vorgestellte Isolierschicht umfasst vorzugsweise eine Hauptisolierschicht, sowie mindestens eine Glimmschutzschicht, welche ein Außenglimmschutz, ein Endenglimmschutz und/oder eine Innenpotentialsteuerung ist. Dabei können die vorgestellten Mikrokapseln in der Hauptisolierschicht, und/oder in der Glimmschutzschicht enthalten sein.

In einer bevorzugten Ausführungsform enthält eine erste Teilmenge der Mikrokapseln als ersten Bestandteil des Ausheilungsreagenz ein fließfähiges Kunstharz, insbesondere ein Epoxidharz, während eine zweite Teilmenge der Mikrokapseln als zweiten Bestandteil des Ausheilungsreagenz einen dem Kunstharz zugeordneten Härter oder Beschleuniger enthält. Einer dieser beiden Bestandteile, insbesondere das Kunstharz, kann auch in der Matrix der Isolierschicht, also außerhalb der Mikrokapseln, enthalten sein. In diesem Fall ist lediglich der zweite Bestandteil des Ausheilungsreagenz, insbesondere der Härter bzw. Beschleuniger, in den Mikrokapseln aufgenommen.

In dem Ausheilungszustand ist das Ausheilungsreagenz durch das Zusammentreffen der der beiden Bestandteile aushärtbar.

In einer weiteren bevorzugten Ausführungsform ist das Ausheilungsreagenz ebenfalls durch ein Gemisch aus einem Harz, wiederum insbesondere einem Epoxidharz, und einem zugehörigen Härter gebildet. In diesem Falle ist dieses Gemisch in einer einzelnen, insbesondere in jeder der Mikrokapseln, enthalten. Dabei ist vorgesehen, dass in der Isolierschicht ein Katalysator enthalten ist, wobei dieser Katalysator ein Aushärten des Ausheilungsreagenz bewirkt. Vorzugsweise ist der Katalysator bereits herstellungsbedingt in der Isolierschicht vorhanden, was insbesondere der Fall ist, wenn das Ausheilungsreagenz zumindest im Wesentlichen der Polymermatrix der Isolierschicht entspricht. Im Falle einer herkömmlichen, sogenannten "Micalastic"-Isolierung wird beispielsweise stets ein Katalysator eingesetzt, der somit überall in der Harzmatrix der Isolierschicht vorhanden ist.

In einer weiteren vorteilhaften Ausführungsform sind in dem Ausheilungsreagenz Nanopartikel enthalten, also Partikel, welche einen (Äquivalent-) Durchmesser von <= 100 nm aufweisen. Es hat sich gezeigt, dass durch den Einsatz von Nanopartikeln die Teilentladungsbeständigkeit der Isolierschicht - zumindest im Bereich eines im Ausheilungszustand ausgefüllten Hohlraums oder Risses - vorteilhaft weiter erhöht wird.

Wie eingangs erwähnt, wird in einem typischen Alterungsprozess der Isolierschicht leitfähiger Kohlenstoff freigesetzt, welcher wiederum eine Zerstörung der Isolierschicht forciert. Um diesen Mechanismus zu durchbrechen, ist in einer vorteilhaften Ausführungsform der Erfindung vorgesehen, dass das Ausheilungsreagenz einen Stoff enthält, welcher zum Einschluss und zur elektrischen Isolierung von durch die betriebsbedingte Beanspruchung freigesetztem Kohlenstoff geeignet ist.

Geeignete Stoffe für das Ausheilungsreagenz sind beispielsweise Acrylate oder Polymere mit einer Trithiocarbonat-Einheit. Des Weiteren sind hierzu Butylkautschuk oder Polymere oder Polymermischungen auf der Basis von Polyethylen, Polysterol, Polyester und/oder Polytetrafluorethylen anwendbar. Vorzugsweise wird als Ausheilungsreagenz Polyisobutylen in Kombination mit einer Lewis-Säure, insbesondere Bortrifluorid, als Beschleuniger eingesetzt. Außerdem sind Naturkautschuke wie z.B. Hevein einsetzbar. Bei den genannten Materialien führt ein positiver Ausdehnungskoeffizient bei der Verkettung zum Einschluss von freigesetztem Kohlenstoff sowie zur Schließung von etwaigen Spalten und Mikrorissen.

Gemäß dem erfindungsgemäßen Verfahren zur Herstellung einer selbstheilenden Isolierschicht ist vorgesehen, dass die Mikrokapseln zunächst in ein Harz eingebracht werden, aus welchem anschließend die Hauptisolierschicht und/oder die Glimmschutzschicht hergestellt wird. Dabei kann das Harz, vorzugsweise ein Epoxid- oder Polyesterharz, insbesondere ein Imprägnier- oder ein Gießharz sein, welches im Zuge eines Vakuumimprägnierverfahrens eingesetzt wird. Dabei wird die Hauptisolierschicht hergestellt, indem der Leiterstab mit Glasseiden-Glimmerbändern umwickelt wird, wobei der umwickelte Leiterstab vor oder nach seiner Montage in einer zugeordneten Nut mit dem Harz durchtränkt und gehärtet, und somit zu einem festen Verbundwerkstoff verklebt wird.

Andererseits kann das Harz ein vorreagiertes Harz, wiederum vorzugsweise ein Epoxid- oder Polyesterharz, sein, welches im Zuge eines sogenannten "Resin-Rich"-Verfahrens herangezogen wird. Dabei werden die Glimmerbänder bereits vor dem Aufwickeln auf den Leiterstab mit dem vorreagierten Harz imprägniert, wobei diese nach dem Aufwickeln noch gepresst und ausgehärtet werden.

Zusätzlich oder alternativ ist vorgesehen, dass die Mikrokapseln in einen Bandkleber eines Glimmerbands eingebracht werden.

Wiederum zusätzlich oder alternativ ist vorgesehen, die Mikrokapseln in ein Glimmerpapier einzubringen, welches zur Herstellung eines Glimmerbandes herangezogen wird.

In einer weiteren Verfahrensvariante ist vorgesehen, dass die Mikrokapseln an einen Glasseidenträger eines Glimmerbandes angehaftet werden.

In wiederum einer weiteren Verfahrensvariante ist vorgesehen, dass Glimmerbänder auf einen Leiterstab aufgewickelt werden, und dass der bewickelte Leiterstab in ein chemisches Lösemittel oder in eine wässrige Suspension eingetaucht wird, in welchem jeweils die Mikrokapseln enthalten sind, wodurch die Glimmerbänder im Wesentlichen mit den Mikrokapseln vorimprägniert werden.

Vorzugsweise ist vorgesehen, die vorgestellte Isolierschicht zur Isolierung eines Leiterstabs einer elektrischen Maschine zu verwenden. Es ist jedoch auch denkbar, die Isolierschicht für andere Hochspannungsanwendungen, insbesondere für einen Gießharzwandler, eine Hochspannungsdurchführung, für eine Stromdurchführung und/oder einen Zündtransformator für eine Verbrennungskraftmaschine zu verwenden.

Nachfolgend werden Ausführungsbeispiele der Erfindung anhand einer Zeichnung näher erläutert. Darin zeigen:
- FIG 1: in einer grob schematisch vereinfachten Darstellung einen Ausschnitt aus einer elektrischen Maschine mit einem isolierten Leiterstab, der einen Teil einer Statorwicklung bildet, wobei der Leiterstab mit einer selbstheilenden Isolierschicht versehen ist,
- FIG 2 bis 4: in jeweils schematischer Darstellung die Isolierschicht, welche mit einem Ausheilungsreagenz gefüllte Mikrokapseln enthält, in drei aufeinanderfolgenden Zuständen während eines Ausheilprozesses.

Einander entsprechende Teile und Größen sind in allen Figuren stets mit den gleichen Bezugszeichen versehen.

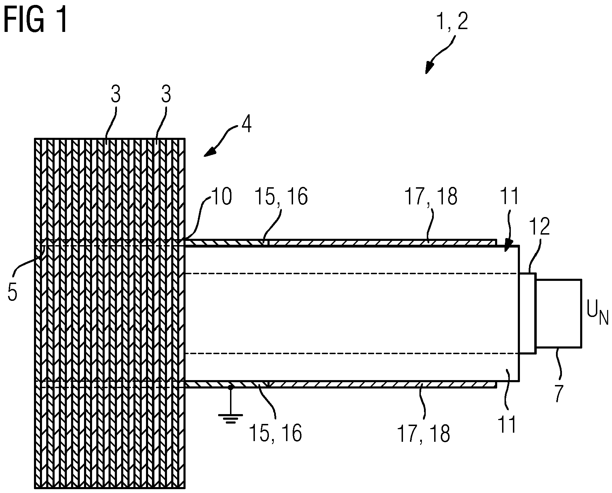

FIG 1 zeigt in einer stark vereinfachten Darstellung einen Ausschnitt aus einer elektrischen Maschine 1, hier eines Drehstrom-Turbogenerators. Die Maschine 1 umfasst einen Stator 2 (auch als Ständer bezeichnet), in dem ein (nicht explizit dargestellter) Rotor drehbar gelagert ist.

Der Stator 2 umfasst ein aus einer Vielzahl von aneinander gereihten, und untereinander isolierten Blechplatten 3 gebildetes (Stator-)Blechpaket 4. In das Blechpaket 4 sind in an sich bekannter Weise quer zur Flächenausdehnung der Blechplatten 3 mehrere durchgehende (Längs-)Nuten 5 eingebracht, von denen in FIG 1 aus Gründen der Vereinfachung lediglich eine dargestellt ist. In jeder Nut 5 liegt ein Leiterstab 7 ein. Jeder Leiterstab 7 ist (in nicht explizit dargestellter Weise) wiederum aus mehreren gegeneinander isolierten Kupfer-Teilleitern gebildet, die zur Bildung eines sogenannten Roebelstabs miteinander verdrillt sind.

An einem Nutaustritt 10 ragt der Leiterstab 7 aus der Nut 5 heraus.

Zur Isolierung des unter Betriebsbedingungen mit einer elektrischen Hochspannung U_{N} beaufschlagten Leiterstabs 7 gegenüber dem geerdeten Blechpaket 4 ist dieser umfänglich zur Ausbildung einer Hauptisolierschicht 11 mit einem in einem Vakuumtränkverfahren (Global Vacuum Pressure Impregnation) getränkten Glasseiden-Glimmerband umwickelt.

Um die Bildung von Potentialspitzen zu vermeiden, und somit die Entstehung von Teilentladungen zu reduzieren, ist der Leiterstab 7 innerhalb der Hauptisolierschicht 11 mit einer durch ein Leitvlies gebildeten Innenpotentialsteuerung 12 versehen. Zudem ist die Hauptisolierschicht 11 zumindest innerhalb des Blechpakets 4 außenseitig mit einer elektrisch leitfähigen Schicht 15 umgeben, die als Außenglimmschutz 16 dient. Der Außenglimmschutz 16 ist etwas über den Nutaustritt 10 hinaus fortgeführt, steht also geringfügig aus dem Blechpaket 4 hervor.

Um die Entstehung einer Gleitanordnung zu vermeiden, ist in der Verlängerung des Außenglimmschutzes 16 ein Endenglimmschutz 17 auf die Hauptisolierschicht 11 aufgebracht, welcher durch eine halbleitfähige Schicht 18 gebildet ist, deren Oberflächenwiderstand in Axialrichtung des Leiterstabs 7 ortsabhängig variiert. Zusammenfassend sind die Hauptisolierschicht 11, die Innenpotentialsteuerung 12, der Außenglimmschutz 16, sowie der Endenglimmschutz 17 als selbstheilende Isolierschicht 19 bezeichnet.

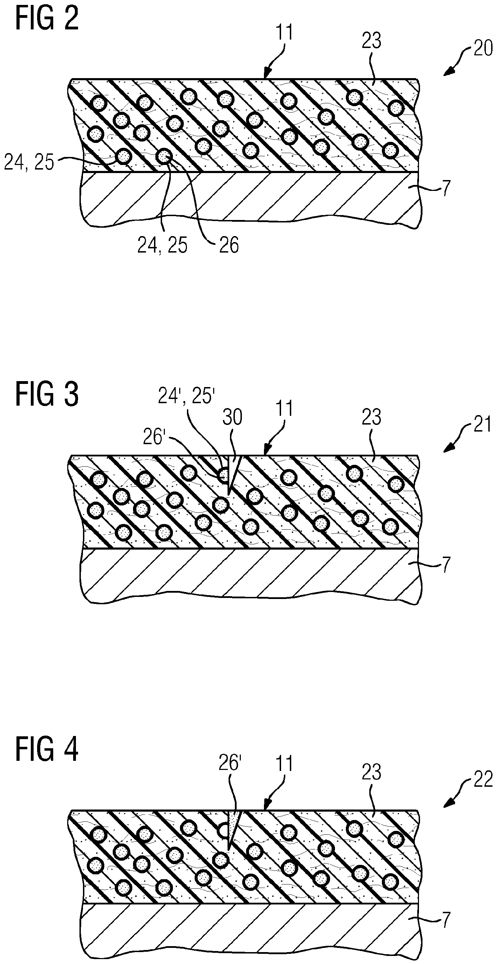

Anhand der FIG 2 bis FIG 4 ist der Selbstheilungseffekt der Isolierschicht 19 schematisch erläutert. In den Figuren ist zu Vereinfachungszwecken jeweils lediglich die Hauptisolierschicht 11 dargestellt. Dabei ist die Hauptisolierschicht 11 in FIG 2 in einem Ausgangszustand 20, in FIG 3 in einem Beanspruchungszustand 21 und in FIG 4 in einem Ausheilungszustand 22 dargestellt.

In dem Ausgangszustand 20 gemäß FIG 2 ist die Hauptisolierschicht 11 im Wesentlichen aus einem (ausgehärteten) Harz 23 gebildet, welches den Leiter 7 umfänglich umschließt. Der Harz 23 enthält eine Vielzahl von schematisch vergrößert dargestellten Mikrokapseln 24, welche jeweils eine vergleichsweise feste hohlkugelförmige Schale 25 aus Glas oder einem Elastomer umfassen, in welcher jeweils ein Ausheilungsreagenz 26 enthalten ist.

Die Mikrokapseln 24 sind dabei möglichst gleichmäßig in dem Harz 23 verteilt.

Im Betrieb der elektrischen Maschine kommt es zu wechselnden, insbesondere thermomechanischen Beanspruchungen, welche gemäß dem Beanspruchungszustand 21 zur Bildung eines (ebenfalls schematisch vergrößert dargestellten) mikroskopischen Risses 30 führen. Durch die Belastung der Hauptisolierschicht 11 wird zudem eine in Rissnähe befindliche Mikrokapsel 24' bzw. deren Schale 25' aufgebrochen.

Das in der Mikrokapsel 24' befindliche Ausheilungsreagenz 26' ergießt sich daraufhin zumindest teilweise in den Riss 30 und härtet dort aus, so dass schließlich gemäß dem Ausheilungszustand 22 das ausgehärtete Ausheilungsreagenz 26' den Riss 30 ausfüllt, und somit eine weitere Ausbreitung der Rissbildung unterbunden, oder zumindest verzögert wird.

In der hier vorliegenden Ausführungsvariante ist der Harz 23 im Wesentlichen durch einen Epoxidharz gebildet. Das Ausheilungsreagenz 26 ist dabei im Wesentlichen durch ein Gemisch aus dem gleichen Epoxidharz und einem zugehörigen Härter gebildet. In dem Harz 23 ist ein die Aushärtungsreaktion des Harzes 23 als auch des Ausheilungsreagenz 26 beschleunigender Katalysator enthalten. Beim Austritt aus der Schale 25 kommt das Ausheilungsreagenz 26 mit diesem Katalysator in Kontakt, wodurch die Aushärtungsreaktion des Ausheilungsreagenz 26 ausgelöst wird.

Die Mikrokapseln 24, 24' bestehen beispielsweise aus einer Wand aus Borsilikatglas mit einem mittleren Durchmesser von ca. 50 µm und einer Wandstärke von ca. 10 µm. Derartige Glashohlkugeln werden beispielsweise von der Fa. 3M Deutschland GmbH vertrieben. Als Ausheilungsreagenz 26 enthalten die Mikrokapseln 24, 24' vorzugsweise Bisphenol A-Diglycidylether.

Die Mikrokaspeln können alternativ auch durch Mikroverkapselung mit einer polymeren Hülle, z.B. Acrylat oder einem amingehärteten Harz hergestellt sein.

Solche polymeren Mikrohohlkugeln können beispielsweise durch Vertropfung, Grenzflächenreaktion, In-Situ-Polymerisation, Phasenseparation, elektrostatische Mikroverkapselung oder durch Anwendung des Rührkesselverfahrens, Mehrstoffdüsenverfahrens oder der Doppelemulsionsmethode hergestellt sein.

## Patentansprüche

1. Selbstheilende Isolierschicht (19),
insbesondere für einen Leiterstab (7) einer elektrischen Maschine (1), in welcher Mikrokapseln (24) enthalten sind, wobei die geschlossenen Mikrokapseln (24) in einem Ausgangszustand (21) ein Ausheilungsreagenz (26) oder einen Bestandteil eines solchen enthalten,
wobei die Mikrokapseln (24) infolge einer betriebsbedingten Beanspruchung, welche zur Bildung eines (mikroskopischen) Risses (30) in der Isolierschicht (19) ausreichend ist, aufbrechbar sind, so dass das Ausheilungsreagenz (26) oder dessen Bestandteil aus den Mikrokapseln (24) austritt, und das ausgehärtete Ausheilungsreagenz (26) einen gebildeten Riss (30) in der Isolierschicht (19) zumindest teilweise ausfüllt.

2. Isolierschicht (19) nach Anspruch 1,
mit einer Hauptisolierschicht (11),
sowie mit mindestens einer Glimmschutzschicht, welche ein Außenglimmschutz (16), ein Endenglimmschutz (17) und/oder eine Innenpotentialsteuerung (12) ist,
wobei die Mikrokapseln (24) in der Hauptisolierschicht (11), und/oder in der Glimmschutzschicht (12,16,17) enthalten sind.

3. Isolierschicht (19) nach Anspruch 1 oder 2,
wobei das Ausheilungsreagenz (26) in dem Ausgangszustand (20) flüssig ist.

4. Isolierschicht (19) nach einem der Ansprüche 1 bis 3, wobei eine erste Teilmenge der Mikrokapseln (24) einen ersten Bestandteil des Ausheilungsreagenz (26), insbesondere ein fließfähiges Kunstharz, enthält,
wobei eine zweite Teilmenge der Mikrokapseln (24) einen zweiten Bestandteil des Ausheilungsreagenz (26), insbesondere einen ebenfalls fließfähigen Härter enthält, und
wobei das Ausheilungsreagenz (26) durch ein Zusammentreffen der beiden Bestandteile aushärtbar ist.

5. Isolierschicht (19) nach einem der Ansprüche 1 bis 4, welche einen Katalysator enthält, und
wobei in dem Ausheilungszustand (22) das Ausheilungsreagenz (26) durch ein Zusammentreffen mit dem Katalysator aushärtbar ist.

6. Isolierschicht (19) nach Anspruch 5,
wobei das Ausheilungsreagenz (26) ein Gemisch aus einem Epoxidharz und einem zugehörigen Härter ist.

7. Isolierschicht (19) nach einem der Ansprüche 1 bis 6, wobei das Ausheilungsreagenz (26) Nanopartikel enthält.

8. Isolierschicht (19) nach einem der Ansprüche 1 bis 7, wobei das Ausheilungsreagenz (26) einen Stoff enthält, welcher zum Einschluss und zur elektrischen Isolierung von durch die betriebsbedingte Beanspruchung freigesetztem Kohlenstoff geeignet ist.

9. Verfahren zur Herstellung einer Isolierschicht (19) gemäß einem der Ansprüche 1 bis 8,
wobei die Mikrokapseln (24) zunächst in ein Harz (23) eingebracht werden, welches anschließend zur Herstellung der Hauptisolierschicht (11) und/oder der Glimmschutzschicht (12, 16, 17) herangezogen wird.

10. Verfahren zur Herstellung einer Isolierschicht (19) nach Anspruch 9,
wobei die Mikrokapseln (24) in einen Bandkleber eines Glimmerbands eingebracht werden.

11. Verfahren zur Herstellung einer Isolierschicht (19) nach Anspruch 9 oder 10,
wobei die Mikrokapseln (24) in ein Glimmerpapier eingebracht werden, welches zur Herstellung eines Glimmerbandes herangezogen wird.

12. Verfahren zur Herstellung einer Isolierschicht (19) nach einem der Ansprüche 9 bis 11,
wobei die Mikrokapseln (24) an einen Glasseidenträger eines Glimmerbandes angehaftet werden.

13. Verfahren nach einem der Ansprüche 9 bis 12,
wobei Glimmerbänder auf einen Leiterstab (7) aufgewickelt werden, und
wobei der bewickelte Leiterstab (7) in ein chemisches Lösemittel oder in eine wässrige Suspension eingetaucht wird, in welchem jeweils die Mikrokapseln (24) enthalten sind, wodurch die Glimmerbänder mit den Mikrokapseln (24) vorimprägniert werden.

14. Elektrische Maschine (1), mit einem Leiterstab (7), welcher mit Hilfe einer Isolierschicht (19) gemäß einem der Ansprüche 1 bis 8 isoliert ist.
